(19) Europäisches Patentamt

European Patent Office

Office européen des brevets

(11) Publication number: **0 585 210 A1**

## EUROPEAN PATENT APPLICATION

(12)

(21) Application number: **93870176.0**

(51) Int. Cl.⁵: **A01N 57/20**, //(A01N57/20, 57:20)

(22) Date of filing: **23.08.93**

(30) Priority: **24.08.92 US 933542**

(43) Date of publication of application:
**02.03.94 Bulletin 94/09**

(84) Designated Contracting States:
**AT BE CH DE DK ES FR GB GR IE IT LI LU MC NL PT SE**

(71) Applicant: **MONSANTO COMPANY**
**800 North Lindbergh Boulevard**
**St. Louis Missouri 63167(US)**

(72) Inventor: **Blowes, William Maxwell**
**15515 Twin Gate Drive**
**Chesterfield, Missouri 63017(US)**
Inventor: **Hutchinson, Nicholas Charles**
**Rue de la Haut 48**
**B-1380 Lasnes (Plancenoit)(BE)**
Inventor: **Teng, Yeew Thai**
**No. 43 Jalan USJ 6/1,**
**UEP Subang**
**47600 Subang Java, Selangor Darul Ehsan(MY)**
Inventor: **Chang, Tet Jong**
**No. 31 Jalan Asa 3,**
**Taman Asa Java**
**43000 Kajang, Selangor Darul Ehsan(MY)**

(74) Representative: **Bosch, Henry et al**
**Monsanto Services International S.A.**
**Patent Department**
**Avenue de Tervuren 270/272**
**Letter Box No. 21**
**B-1150 Brussels (BE)**

(54) Herbicidal compositions.

㊄ There is provided a synergistic herbicidal composition which comprises a mixture of a herbicidally acceptable salt of N-phosphonomethylglycine and a herbicidally acceptable salt of DL-homoalanin-4-yl(methyl)-phosphinate in a weight ratio of N-phosphonomethylglycine to DL-homoalanin-4-yl(methyl)phosphinate of about 10:1 to about 200:1. There is also provided a method of controlling unwanted vegetation which comprises applying a herbicidally effective amount of the above composition wherein the amount of DL-homoalanin-4-yl-(methyl)phosphinate is applied at a rate between about 10 and about 60 grams per hectare.

## BACKGROUND OF THE INVENTION

This invention relates to herbicidal compositions, and more particularly relates to herbicidal compositions containing a herbicidally acceptable salt of N-phosphonomethylglycine and a herbicidally acceptable salt of DL-homoalanin-4-yl(methyl)phosphinate.

N-Phosphonomethylglycine, known in the agricultural chemical art as glyphosate, is a highly effective and commercially important phytotoxicant useful in controlling the growth of emerging seedlings, maturing and established woody and herbaceous vegetation, and aquatic plants. N-Phosphonomethylglycine and its salts are conveniently applied in an aqueous solution as a post-emergent phytotoxicant for the control of numerous plant species. N-Phosphonomethylglycine and its salts are characterized by a broad spectrum activity, i.e., they control growth of a wide variety of plants.

Commercial formulations of N-phosphonomethylglycine are usually aqueous solutions wherein the N-phosphonomethylglycine is present as a herbicidally acceptable salt, such as an alkali metal salt, the ammonium, alkylsulfonium, or alkylphosphonium salt, or the salt of an amine having a molecular weight of less than about 300. The monoisopropylamine salt of N-phosphonomethylglycine is the most widely used salt in such aqueous compositions. In addition, such compositions usually contain a surfactant to enhance the effectiveness of the N-phosphonomethylglycine when it is applied to the foliage of various plants. The most widely used surfactant in commercial compositions is an ethoxylated fatty amine.

DL-Homoalanin-4-yl(methyl)phosphinate, known in the agricultural chemical art as glufosinate, is also a highly effective and commercially important phytotoxicant which controls a wide spectrum of annual and perennial broadleaf weeds and grasses. The compound is useful as a contact herbicide which has some systemic action for weed control in fruit orchards, grapes, plantations and ornamentals.

Commercial formulations of DL-homoalanin-4-yl-(methyl)phosphinate are usually aqueous solutions wherein the DL-homoalanin-4-yl(methyl)phosphinate is present as a herbicidally acceptable salt, usually the ammonium salt. In addition, such compositions may contain other adjuvants to enhance the effectiveness of the compound when it is applied to various plants.

Because these two active ingredients have received wide commercial acceptance, those skilled in the art have conducted studies on these two herbicides. As an example, R. M. Dunst et al. in an article entitled "Effect of Glyphosate and Glufosinate. Sucker Applications on Grapevines" in Proceedings of the Annual Meeting of the Northeast Weed Science Society (1988) Volume 42, pages 229-32, reports the effects of these two active ingredients alone in particular experiments. Other workers in the art have combined either glyphosate or glufosinate with other active ingredients (see, for example, European Patent Application No. 0 334 041 which reports herbicidal compositions comprising a 2-nitro-5-(substituted pyridyloxy)-benzohydroximic acid derivative with N-phosphonomethylglycine or ammonium DL-homoalanin-4-yl(methyl)phosphinate).

However, in these and other studies, no benefit has been reported on combination of glyphosate and glufosinate. Perhaps this is because those skilled in the art are aware that glufosinate provides fast burndown on vegetation, and consequently, inhibits the action of glyphosate on such vegetation, and as a result, reduces the level of control expected with glyphosate on such unwanted vegetation. When one combines glyphosate and glufosinate in a composition at rates of each active ingredient expected to provide control of grasses and broadleaves, the composition is antagonistic.

Despite anticipation of failure, Applicants have now discovered a herbicidal composition of glyphosate and glufosinate with synergistic properties with many weed species, depending on the weed, the season, and the stage of development, which provides faster visual symptoms of phytotoxicity over the use of glyphosate or glufosinate alone. Such visual symptoms of phytotoxicity is important to the end user, who will use such visual symptoms as an indicator that the phytotoxic composition is effective before tillage, harvest or other treatment. Even in those applications where synergy is not seen, the compositions are not antagonistic, which would be predicted by those skilled in the art.

## SUMMARY OF THE INVENTION

These and other advantages are achieved by a herbicidal composition which comprises a mixture of a herbicidally effective salt of N-phosphonomethylglycine and a herbicidally acceptable salt of DL-homoalanin-4-yl-(methyl)phosphinate in a weight ratio of N-phosphonomethylglycine to DL-homoalanin-4-yl-(methyl)phosphinate of about 10:1 to about 200:1.

There is also provided a method of controlling unwanted vegetation which comprises applying a herbicidally effective amount of a herbicidally acceptable salt of N-phosphonomethylglycine and a herbicidally acceptable salt of DL-homoalanin-4-yl(methyl)phosphinate in a weight ratio of N-phosphonomethylglycine to DL-homoalanin-4-yl(methyl)phosphinate of at least 10:1 wherein the amount of DL-homoalanin-4-yl(methyl)phosphinate applied to the vegetation is between about 10 and about 60 grams per hectare.

DETAILED DESCRIPTION OF THE INVENTION

As noted above, N-phosphonomethylglycine is a well-known herbicide and numerous methods are known in the art for preparing this compound. It is also known in the art that N-phosphonomethylglycine is soluble in water at 25°C to the extent of about 1%, and that to prepare concentrated aqueous compositions containing N-phosphonomethylglycine, it is desirable to prepare herbicidally effective salts of Nphosphonomethylglycine. Such herbicidally effective salts include the trimethylsulphonium salt, the alkali metal salts, ammonium salts or the salt of an organic amine. Suitable alkali metal salts include the salts of lithium, sodium, potassium and the like. Of these, the sodium salt is preferred. Organic amines that have a molecular weight of below about 300 can also be used, and such organic amines include the alkyl amines, alkylene amines and alkanol amines containing not more than two amine groups. The isopropyl amine is preferred.

Also, DL-homoalanin-4-yl-(methyl)phosphinate is a well-known herbicide, and numerous methods are known in the art for preparing this compound. Such compounds are disclosed in U.S. Patent 4,168,968 to Rupp et al., wherein it is disclosed that such compounds are only partially water-soluble, and accordingly, to prepare aqueous compositions, it is desirable to prepare a herbicidally effective salt of this compound. The same herbicidally effective salts that are useful to prepare herbicidally acceptable salts of N-phosphonomethylglycine can be used and such salts can be the same or different from the salts of N-phosphonomethylglycine. The preferred salts include the alkali metals and ammonium, and ammonium is especially preferred.

The weight ratio of N-phosphonomethylglycine (expressed as its acid equivalent) to DL-homoalanin-4-yl(methyl)phosphinate(expressed as the active ingredient) can vary from about 10:1 to about 200:1. At a weight ratio of less than about 10:1, antagonism is seen in the biological effectiveness of the mixture, i.e., the biological effectiveness is not as good as the individual active ingredients. At a weight ratio of N-phosphonomethylglycine to DL-homoalanin-4-yl(methyl)phosphinate of greater than about 200:1, no significant visual symptoms of phytotoxicity are seen over the use of N-phosphonomethylglycine alone, although such higher weight ratios are not harmful. It is preferred to use a weight ratio of N-phosphonomethylglycine to DL-homoalanin-4-yl-(methyl)phosphinate of between about 15:1 and about 150:1, and even more preferred to use a weight ratio between about 25:1 to about 75:1.

It has been found that the amount of each active ingredient to be applied to the vegetation affects the biological effectiveness of the compositions of the present invention. When DL-homoalanin-4-yl(methyl)-phosphinate is used as the sole active ingredient, it is typically applied at a rate between about 0.5 and 1 kilogram of active ingredient per hectare, but in the compositions of the present invention in admixture with N-phosphonomethylglycine, it is applied at an amount between about 10 and about 60 grams of active ingredient per hectare, and preferably between about 20 and about 40 grams per hectare. At amounts greater than about 60 grams per hectare, the composition tends to become antagonistic, and at rates less than about 10 grams per hectare, the benefits of the DL-homoalanin-4-yl(methyl)phosphinate in the compositions is diminished. Thus, the compositions of the present invention should be applied at a weight ratio of N-phosphonomethylglycine as acid equivalent to DL-homoalanin-4-yl(methyl)phosphinate as the active ingredient of about 10:1 or higher, and the amount of DL-homoalanin-4-yl(methyl)phosphinate applied to the vegetation should be between about 10 and about 60 grams, preferably between about 20 and about 40 grams, of active ingredient per hectare.

The herbicide compositions of the present invention include concentrated formulations which require dilution prior to application to the plants, as well as diluted solutions. The compositions can contain adjuvants, diluents, extenders, carriers and conditioning agents to provide compositions in the form of finely divided particulate solids, pellets, solutions, dispersions or emulsions. Thus, the active ingredients can be used with an adjuvant such as a finely divided solid, a liquid of organic origin, water, a wetting agent, a dispersing agent, an emulsifying agent or any suitable combination of these. From the viewpoint of economy and convenience, water is the preferred diluent.

The herbicidal compositions of this invention can preferably contain one or more surface active agents to enhance the dispersion of the composition in water or in oil. It is preferred that the compositions contain a surface active agent to enhance their biological efficiency, and suitable agents include anionic, cationic and nonionic surfactants. Ethoxylated quaternary ammonium compounds and ethoxylated fatty acid amines are preferred in the present compositions.

In addition to surfactants, the compositions of the present invention can also contain other adjuvants to increase the biological effectiveness of the compositions. Such suitable adjuvants include ammonium

3

sulfate, ammonium nitrate, potassium sulfate, potassium chloride, sodium sulfate, urea, monoammonium phosphate, diammonium phosphate and mixtures thereof. Ammonium sulfate is preferred. The weight ratio of these salts to the N-phosphonomethylglycine usually varies from about 10:1 to about 1:10, more preferably between about 1:1 to about 5:1, say about 3:1. However, higher concentrations of these salts is not harmful.

The compositions of the present invention are applied to the above ground portions of plants, preferably to the foliage. The method of application will depend upon the herbicide composition, but with an aqueous solution, sprayers are convenient. The application of an effective amount of the compositions of the present invention to the plant is essential and critical for the practice of the present invention. The exact amount of composition to be employed is dependent upon the response desired in the plant, the concentration of the active ingredients in the composition to be applied, as well as other factors such as the plant species and stage of development. In general, the application of from about 0.05 to about 10 kg per hectare, more typically from about 0.5 to 5 kg per hectare, based on the total weight of the active ingredients in the composition, will provide a phytotoxic effect. Those skilled in the art can readily determine the appropriate application rate.

The invention is further illustrated, but not limited to the following examples, which illustrate the ratios and lack of antagonism of the present composition on a variety of weed species in a variety of climatic conditions. In all of these examples the amount of N-phosphonomethylglycine is expressed as the acid equivalent (ae) and the amount of DL-homoalanin-4-yl(methyl)phosphinate is expressed as the active ingredient (ai). The phytotoxic effects were determined visually, on a scale of 0 to 100, between 3 and 30 days after treatment (DAT). The data shortly after treatment was based on visual symptoms of phytotoxicity, e.g., yellowing and burndown, and at longer times (e.g., 30 days) based on percent control.

Examples 1-15

A series of plots in Malaysia approximately 10 square meters in size in strips of mature rubber (greater than 30% shade) were treated with a commercial formulation of ammonium DL-homoalanin-4-yl(methyl)-phosphinate and a commercial formulation of the isopropylamine salt of N-phosphonomethylglycine containing ammonium sulfate, and mixtures thereof. The plots contained a variety of weed species but the two dominate species were Asystasia intrusa (Asyin in Table 1) and Ottochloa nodosa (Ottno in Table 1). The results are shown in Table 1.

TABLE 1

| Example | Active Ingredient | Rate (Kg ae/ai/ha) | Weight Ratio | Percent Control | | | | | |
|---|---|---|---|---|---|---|---|---|---|
| | | | | Asyin(DAT) | | | Ottno(DAT) | | |
| | | | | 4 | 7 | 30 | 4 | 7 | 30 |
| 1 | A | 0.54 | -- | 5 | 13 | 99 | 12 | 42 | 99 |
| 2 | B | 0.027 | -- | 10 | 5 | 0 | 43 | 43 | 35 |
| 3 | A+B | 0.54+0.027 | 20:1 | 42 | 47 | 99 | 65 | 70 | 99 |
| 4 | C | 0.54 | -- | 33 | 30 | 99 | 15 | 45 | 99 |
| 5 | C+B | 0.54+0.027 | 20:1 | 53 | 37 | 96 | 78 | 72 | 99 |
| 6 | D+B | 0.54+0.027 | 20:1 | 73 | 43 | 99 | 82 | 82 | 99 |
| 7 | E+B | 0.54+0.027 | 20:1 | 72 | 52 | 99 | 82 | 80 | 99 |
| 8 | A+B | 0.54+0.036 | 15:1 | 50 | 30 | 96 | 75 | 75 | 99 |
| 9 | C+B | 0.54+0.036 | 15:1 | 67 | 53 | 98 | 90 | 78 | 99 |
| 10 | D+B | 0.54+0.036 | 15:1 | 78 | 53 | 98 | 82 | 85 | 99 |
| 11 | E+B | 0.54+0.036 | 15:1 | 80 | 63 | 98 | 87 | 87 | 99 |
| 12 | A+B | 0.54+0.054 | 10:1 | 60 | 53 | 95 | 92 | 87 | 99 |
| 13 | C+B | 0.54+0.054 | 10:1 | 80 | 52 | 97 | 92 | 88 | 99 |
| 14 | D+B | 0.54+0.054 | 10:1 | 90 | 67 | 99 | 90 | 92 | 99 |
| 15 | E+B | 0.54+0.054 | 10:1 | 93 | 63 | 97 | 90 | 92 | 99 |

A - a commercial formulation of the isopropylamine salt of N-phosphonomethylglycine B - a commercial formulation of the ammonium salt of DL-homoalanin-4-yl(methyl)phosphinate

C - formulation A plus 0.5 kg/ha of ammonium sulfate

D - a commercial formulation of the isopropylamine salt of N-phosphonomethylglycine plus ammonium sulfate in a weight ratio of 1:2.7

E - formulation D plus additional ammonium sulfate to provide 4.44 kg ammonium sulfate/ha

As can be seen from the above table, the mixture provided dramatic visual symptoms of phytotoxicity at an early stage plus excellent control of these two weeds, particularly over each one of the commercial formulations when used alone.

Examples 16-24

The general procedure of Examples 1-15 was repeated, except that the plots were in strips of young rubber, wherein there was less than 30% shade. The dominate weed was a legume cover coop. The results are shown in Table 2.

TABLE 2

| Example | Active Ingredient | Rate (kg ae/ai/ha) | Weight Ratio | Percent Control (Days After Treatment) | | | |
|---|---|---|---|---|---|---|---|
| | | | | 3 | 7 | 15 | 30 |
| 16 | A | 0.81 | -- | 0 | 10 | 40 | 50 |
| 17 | B | 0.045 | -- | 2 | 2 | 0 | 0 |
| 18 | A + B | 0.81 + 0.045 | 18:1 | 20 | 30 | 45 | 40 |
| 19 | A | 0.9 | -- | 0 | 10 | 50 | 70 |
| 20 | A + B | 0.9 + 0.045 | 20:1 | 10 | 40 | 60 | 65 |
| 21 | F | 0.6 | -- | 0 | 5 | 30 | 30 |
| 22 | F + B | 0.6 + 0.045 | 13:1 | 50 | 55 | 50 | 40 |
| 23 | G | 0.72 | -- | 0 | 10 | 50 | 70 |
| 24 | G + B | 0.72 + 0.045 | 16:1 | 40 | 80 | 65 | 60 |

A - a commercial formulation of the isopropylamine salt of N-phosphonomethylglycine B - a commercial formulation of the ammonium salt of DL-homoalanin-4-yl(methyl)phosphinate F - a formulation of the isopropylamine salt of N-phosphonomethylglycine containing sufficient ammonium sulfate to provide 1.6 kg/ha G - a formulation of the isopropylamine salt of N-phosphonomethylglycine containing 1.92 kg/ha ammonium sulfate

Examples 25-59

The compositions of the present invention were tested with a variety of weeds in the State of Missouri in field test plots to simulate non-farm usage. The results are shown in Table 3.

## TABLE 3

| Example | Active Ingredient | Rate (kg ae/ai/ha) | Weight Ratio | % Control (DAT) | | | |
|---|---|---|---|---|---|---|---|
| | | | | 4 | 7 | 13 | 26 |
| *Sida spinosa* | | | | | | | |
| 25 | A | 4.3 | -- | 28 | 91 | 99 | 100 |
| 26 | A+B | 4.3+0.43 | 10:1 | 35 | 60 | 80 | 87 |
| 27 | A+B | 4.3+0.17 | 25:1 | 27 | 60 | 80 | 87 |
| 28 | A+B | 4.3+0.085 | 50:1 | 28 | 73 | 92 | 95 |
| 29 | A+B | 4.3+0.043 | 100:1 | 30 | 90 | 97 | 98 |
| *Ipomoea spp* | | | | | | | |
| 30 | A | 4.3 | -- | 12 | 28 | 73 | 82 |
| 31 | A+B | 4.3+0.43 | 10:1 | 35 | 50 | 83 | 79 |
| 32 | A+B | 4.3+0.17 | 25:1 | 25 | 47 | 70 | 78 |
| 33 | A+B | 4.3+0.085 | 50:1 | 23 | 43 | 80 | 88 |
| 34 | A+B | 4.3+0.043 | 100:1 | 23 | 60 | 88 | 90 |
| *Amaranthus retroflexus* | | | | | | | |
| 35 | A | 4.3 | -- | 63 | 100 | 100 | 100 |
| 36 | A+B | 4.3+0.43 | 10:1 | 47 | 87 | 93 | 97 |
| 37 | A+B | 4.3+0.17 | 25:1 | 63 | 92 | 100 | 100 |
| 38 | A+B | 4.3+0.085 | 50:1 | 63 | 100 | 100 | 100 |
| 39 | A+B | 4.3+0.043 | 100:1 | 63 | 100 | 100 | 100 |
| *Cassia obtusifolia* | | | | | | | |
| 40 | A | 4.3 | -- | 60 | 100 | 100 | 100 |
| 41 | A+B | 4.3+0.43 | 10:1 | 70 | 100 | 100 | 100 |
| 42 | A+B | 4.3+0.17 | 25:1 | 77 | 100 | 100 | 100 |
| 43 | A+B | 4.3+0.085 | 50:1 | 77 | 100 | 100 | 98 |
| 44 | A+B | 4.3+0.043 | 100:1 | 85 | 100 | 100 | 100 |

## TABLE 3 (cont'd)

| Example | Active Ingredient | Rate (kg ae/ai) | Weight Ratio | % Control/DAT | | | |
|---------|-------------------|-----------------|--------------|---|---|---|---|
| | | | | 4 | 7 | 13 | 26 |
| | | *Sesbania exaltata* | | | | | |
| 45 | A | 4.3 | -- | 77 | 99 | 99 | 98 |
| 46 | A+B | 4.3+0.43 | 10:1 | 82 | 99 | 100 | 100 |
| 47 | A+B | 4.3+0.17 | 25:1 | 77 | 99 | 98 | 100 |
| 48 | A+B | 4.3+0.085 | 50:1 | 73 | 99 | 98 | 100 |
| 49 | A+B | 4.3+0.043 | 100:1 | 67 | 99 | 99 | 100 |
| | | *Brachiaria platyphylla* | | | | | |
| 50 | A | 4.3 | -- | 73 | 94 | 99 | 100 |
| 51 | A+B | 4.3+0.43 | 10:1 | 68 | 94 | 99 | 100 |
| 52 | A+B | 4.3+0.17 | 25:1 | 77 | 96 | 99 | 100 |
| 53 | A+B | 4.3+0.085 | 50:1 | 77 | 98 | 100 | 100 |
| 54 | A+B | 4.3+0.043 | 100:1 | 73 | 99 | 100 | 100 |
| | | *Portulaca oleracea* | | | | | |
| 55 | A | 4.3 | -- | 53 | 97 | 97 | 100 |
| 56 | A+B | 4.3+0.43 | 10:1 | 55 | 90 | 80 | 100 |
| 57 | A+B | 4.3+0.17 | 25:1 | 57 | 94 | 95 | 100 |
| 58 | A+B | 4.3+0.085 | 50:1 | 60 | 93 | 98 | 100 |
| 59 | A+B | 4.3+0.043 | 100:1 | 65 | 95 | 98 | 100 |

A - a commercial formulation of the ispropylamine salt of N-phosphonomethylglycine B - a commercial formulation of the ammonium salt of DL-homoalanin-4-yl(methyl)phosphinate

Examples 60-63

A series of test plots (10 m$^2$) of perennial rye grass in New Zealand were sprayed during the mid-winter season. For comparative purposes Example 60 is N-phosphonomethylglycine alone. Examples 61 to 63, which are within the present invention, demonstrate clear enhancement in the early stages with no antagonism with complete control. The data are presented in Table 4.

TABLE 4

| Example | Active Ingredient | Rate (kg ae/ai/ha) | Weight Ratio | % Control (DAT) | | |
|---|---|---|---|---|---|---|
| | | | | 5 | 14 | 30 |
| 60 | A | 0.7 | -- | 35 | 57 | 72 |
| 61 | A + B | 0.7 + 0.010 | 70:1 | 55 | 78 | 68 |
| 62 | A + B | 0.7 + 0.020 | 35:1 | 73 | 83 | 70 |
| 63 | A + B | 0.7 + 0.040 | 17.5:1 | 90 | 92 | 75 |

A - a commercial formulation of the isopropylamine salt of N-phosphonomethylglycine
B - a commercial formulation of the ammonium salt of DL-homoalanin-4-yl(methyl)phosphinate

Although the invention has been described in terms of specified embodiments which are set forth in considerable detail, it should be understood that this is by way of illustration only, and that alternative embodiments and operating techniques will become apparent to those skilled in the art in view of the disclosure. For example, it has been reported that L-homoalanin-4-yl(methyl)phosphinate is the active phytotoxic metabolite of 4-(hydroxymethylphosphinyl)-L-2-aminobutanoyl-L-alanyl-alanine, commonly known in the agricultural chemical art as bialaphos, and thus, may be substituted for part or all of the glufosinate in the compositions of the present invention. Accordingly, modifications can be made without departing from the spirit of the described invention.

**Claims**

1. A herbicidal composition which comprises a mixture of a herbicidally acceptable salt of N-phosphonomethylglycine and a herbicidally acceptable salt of DL-homoalanin-4-yl(methyl)phosphinate in a weight ratio of N-phosphonomethylglycine to DL-homoalanin-4-yl(methyl)phosphinate of about 10:1 to about 200:1.

2. A composition of Claim 1 wherein the weight ratio is between about 15:1 and about 150:1.

3. A composition of Claim 2 wherein the weight ratio is between about 25:1 and about 75:1.

4. A composition of Claim 1 wherein the herbicidally acceptable salts of N-phosphonomethylglycine and DL-homoalanin-4-yl(methyl)phosphinate are individually selected from the group consisting of the alkali metal salts, the ammonium salts and the salts of an organic amine having a molecular weight below about 300.

5. A composition of Claim 4 wherein each salt is the ammonium salt.

6. A composition of Claim 1 which contains an adjuvant selected from the group consisting of ammonium sulfate, ammonium nitrate, potassium sulfate, potassium chloride, sodium sulfate, urea, monoammonium phosphate, diammonium phosphate and mixtures thereof.

7. A composition of Claim 6 wherein the weight ratio of the adjuvant to N-phosphonomethylglycine is between about 10:1 and about 1:10.

8. A composition of Claim 7 wherein the adjuvant is ammonium sulfate.

9. A method of controlling unwanted vegetation which comprises applying a herbicidally effective amount of a herbicidally acceptable salt of N-phosphonomethylglycine and a herbicidally acceptable salt of DL-homoalanin-4-yl(methyl)phosphinatein a weight ratio of N-phosphonomethylglycine to DL-homoalanin-4-yl(methyl)phosphinate of at least 10:1 wherein the amount of DL-homoalanin-4-yl(methyl)phosphinate applied to the vegetation is between about 10 and about 60 grams per hectare.

10. A method of Claim 9 wherein the herbicidally acceptable salts of N-phosphonomethylglycine and DL-homoalanin-4-yl(methyl)phosphinate are individually selected from the group consisting of the alkali metal salts, the ammonium salts and the salts of an organic amine having a molecular weight below about 300.

11. A method of Claim 10 wherein each salt is the ammonium salt.

12. A method of Claim 9 wherein an adjuvant selected from the group consisting of ammonium sulfate, ammonium nitrate, potassium sulfate, potassium chloride, sodium sulfate, urea monoammonium phosphate, diammonium phosphate and mixtures thereof is applied.

13. A method of Claim 12 wherein the weight ratio of the adjuvant to N-phosphonomethylglycine is between about 10:1 and about 1:10.

14. A composition of Claim 13 wherein the adjuvant is ammonium sulfate.

15. A method of Claim 9 wherein the amount of DL-homoalanin-4-yl(methyl)phosphinate applied to the vegetation is between about 20 and about 40 grams per hectare.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | GB-A-2 011 416 (MEIJI SEIKA KAISHA)<br><br>* page 1, line 3 - line 40 *<br>* page 3, line 42 - line 45 *<br>* page 4, line 2 - line 6 *<br>* page 4, line 11 - line 14 *<br>* page 4, line 45 - line 49 *<br>* page 5; table 1 *<br>* page 13; table 4 *<br>* page 17; table 4 * | 1-5,<br>9-11,15 | A01N57/20<br>//(A01N57/20,<br>  57:20) |
| Y | | 6-8,<br>12-14 | |
| Y | EP-A-0 036 106 (HOECHST)<br><br>* the whole document * | 6-8,<br>12-14 | |
| Y | EP-A-0 274 369 (MONSANTO)<br><br>* the whole document * | 6-8,<br>12-14 | |
| Y | C.R.WORTHING ET AL. 'The Pesticide Manual, 9th. edition'<br>1991 , BRITISH CROP PROTECTION COUNCIL , FARNHAM, GB<br>* page 75 * | 1-15 | TECHNICAL FIELDS SEARCHED (Int.Cl.5)<br><br>A01N |
| Y | GB-A-2 007 976 (MEIJI SEIKA KAISHA)<br>* page 2, line 27 - line 65 *<br>* page 4, line 2 - line 17 *<br>* page 4, line 40 - line 42 *<br>* page 5, line 61 - page 6, line 5 *<br>* page 6; table 1 *<br>* page 15; table 8 *<br>* claims 4,11 * | 1-15 | |

-/--

The present search report has been drawn up for all claims

| Place of search | Date of completion of the search | Examiner |
|---|---|---|
| THE HAGUE | 1 December 1993 | Lamers, W |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | DATABASE CAB<br>CAB INTERNATIONAL, WALLINGFORD, OXON, GB<br>AN: 92:64998 CABA<br>M.ITOH ET AL. 'BGX 816 - a new mixture of glyphosate + bialaphos for general weed control.'<br>* abstract *<br>& PROCEEDINGS 12TH ASIAN-PACIFIC WEED SCIENCE SOCIETY CONFERENCE<br>no. 2 , 1989 , TAIWAN<br>pages 387 - 392<br>PUBL.: TAIPEI, ASIAN-PACIFIC WEED SCIENCE SOCIETY<br>--- | 1-15 | |
| A | DOCUMENTS TECHNIQUES - INSTITUT NATIONAL DE LA RECHERCHE AGRONOMIQUE DE TUNESIE<br>no. 108 , 1991 , ARIANA, TUNESIA<br>H.CHEMLI 'RESULTATS D'ESSAIS DE LUTTE CHIMIQUE CONTRE LA RHOMBOIDE (SALPICHROA RHOMBOIDEA'<br>* page 6 *<br>* page 7 *<br>* page 20 - page 24 *<br>--- | 1-15 | |
| A | EP-A-0 394 211 (MONSANTO)<br>* page 31; example 8 *<br>--- | 1-15 | |
| A | WO-A-90 07275 (MONSANTO)<br>* page 8, line 21 - page 9, line 10 *<br>* page 35; example 38 *<br>----- | 1-14 | |

TECHNICAL FIELDS SEARCHED (Int.Cl.5)

The present search report has been drawn up for all claims

| Place of search | Date of completion of the search | Examiner |
|---|---|---|
| THE HAGUE | 1 December 1993 | Lamers, W |

EPO FORM 1503 03.82 (P04C01)